# EUROPEAN PATENT APPLICATION

(11) **EP 4 741 335 A1**
(43) Date of publication of application: **13.05.2026**
(21) Application number: 24211070.8
(22) Date of filing: 06.11.2024
(51) Int. Cl.: C01B 3/04

(54) **PROCESS FOR PRODUCING A HYDROGEN PRODUCT FROM A FEED STREAM**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Shrivastava, Swatantra Kumar, 60439 Frankfurt am Main (DE)
(74) Representative: Air Liquide

(57) **Abstract**

The invention relates to a process for producing a hydrogen product (2) from a feed stream (4). Said process comprising the following steps:
- providing an ammonia stream (6), in particular a liquid ammonia stream (6);
- directing said feed stream (4) derived from the provided ammonia stream (6) to a succession of at least two gas heated reactors (8) arranged in series to perform a succession of ammonia cracking reactions in the gas heated reactors (8),
so as to produce at least one intermediate cracked gas (10) passing from a gas heated reactor (8) to the subsequent gas heated reactor (8) and thus producing downstream of the succession of said gas heated reactors (8), a cracked gas (12) from which the hydrogen product (2) is derived.

## Description

The present invention relates to a process for producing a hydrogen product from a feed stream.

Hydrogen is renowned for its lightweight nature and optimal combustion properties as a fuel and its environment-friendliness during its combustion or during its electrochemical conversion, for example for a fuel cell. That is, there is no emission of any carbon dioxide (CO2), particulate or sulfur during the use of hydrogen as a fuel. This makes hydrogen a vector for the energy transition.

As a matter of fact, a hydrogen product can be produced from a cracking reaction of an ammonia as feedstock, or from an ammonia cracking reaction. In particular, a vaporized ammonia stream can be used in the ammonia cracking reaction to produce the hydrogen.

Typically, the ammonia cracking reaction takes place in an ammonia cracking reactor comprising tubes filled with catalysts and extending in a furnace. Heat is supplied to said tubes, via external firing of a fuel in said furnace, for example with a firebox supplied by the fuel.

However, the adaptation of the current process at a larger scale is not simple. Indeed, in a conventional ammonia cracking reactor, a significant amount of waste heat is left unused in the flue gas and in the cracked gas. A typical radiant efficiency of such ammonia cracking reactor is comprised between 55 and 60%. That is, about 40% of firing duty ends up as waste heat in the flue gas (the higher the radiant efficiency is, less will be the loss of the firing duty as a waste heat).

For the conventional ammonia cracking reactor, increasing the radiant efficiency is done at the expense of increasing the number of catalysts filled tubes, thus the dimension of the ammonia cracking reactor and the firebox. Moreover, in addition to the over-sizing of these, an attempt to increase said radiant efficiency by increasing the temperature at which the reaction takes place, will inevitably lead to the requirement of high-grade temperature resisting materials for said tubes, which are expensive and which increase the overall cost of the installation.

As a consequence, there is a need to overcome the aforementioned issues, in particular a need to cope with avoiding the loss of the waste heat during the process for producing a hydrogen product from a feed stream, while reducing the space requirement and the overall cost of said installation.

For this purpose, the invention proposes a process for producing a hydrogen product from a feed stream, said process comprising the following steps:
- providing an ammonia stream, in particular a liquid ammonia stream;
- directing said feed stream derived from the provided ammonia stream to a succession of at least two gas heated reactors arranged in series to perform a succession of ammonia cracking reactions in the gas heated reactors, so as to produce at least one intermediate cracked gas passing from a gas heated reactor to the subsequent gas heated reactor and thus producing downstream of the succession of said gas heated reactors, a cracked gas from which the hydrogen product is derived.

The ammonia conversion rate of the intermediate cracked gas is inferior to the ammonia conversion rate of the cracked gas.

Thanks to the invention the number of the gas heated reactors can be adapted for an existing heating system, it is possible to modularize the size and the overall conversion efficiency of the process, without oversizing the heating system while simplifying the design of an installation configured to operate the process.

For example, over 80 % of overall ammonia conversion can be achieved with the two gas heated reactors coupled with a heating system. This allows to revamp an existing installation or plant.

In one embodiment, the process comprises the step of: - heating at least one of the gas heated reactors with said cracked gas as a heating medium stream. In particular, the at least one gas heated reactor is heated with said cracked gas circulating in said at least one gas heated reactor in a co-current manner with the feed stream or with the intermediate cracked gas.

Thus, this allows to reduce the loss of the waste heat, thereby improving the overall conversion efficiency (or the overall thermal efficiency) of the process.

The invention enables improving the overall efficiency of the process, while reducing the space requirement and the overall cost of an installation operating said process.

In one embodiment, the process comprises directing the cracked gas as the heating medium stream successively to said gas heated reactors.

By "directing the cracked gas as the heating medium stream successively to said gas heated reactors", it is referred that the heating medium stream provides heat to the gas heated reactors in series.

In one embodiment, the process comprises the step of: - directing a liquid ammonia stream to a vaporizer configured to receive said liquid ammonia stream and to vaporize said liquid ammonia stream for obtaining a vaporized ammonia stream.

In one embodiment, the process comprises: vaporizing the liquid ammonia stream by recovering heat from the cracked gas.

In one embodiment, the process comprises the step of: - superheating the vaporized ammonia stream with a superheater, thereby obtaining a superheated vaporized ammonia stream. Preferably, the vaporized ammonia stream can be superheated at a temperature of 345°C using said cracked gas, more preferably at a temperature of 365 °C.

In one embodiment, the process comprises: - superheating the vaporized ammonia stream, for example at a temperature of 345 °C, by recovering heat from a flue gas stream generated from said heating system, in particular at 765°C. The flue gas stream may be originated from at least one fired heater of said heating system.

In one embodiment, the process comprises a step of preheating said liquid ammonia stream in a preheater, for example by either using heat from the cracked gas or other heating media, prior to directing the liquid ammonia stream to the vaporizer.

In one embodiment, the process comprises the steps of:
- directing the ammonia stream, in particular said vaporized ammonia stream, and/or said superheated vaporized ammonia stream, to a heating system; and
- providing heat to the ammonia stream, in particular to the vaporized ammonia stream, and/or to the superheated vaporized ammonia stream, with said heating system, thereby obtaining a heated ammonia stream. Preferably, the superheated vaporized ammonia stream is heated up to a temperature of 650 °C.

In one embodiment, said feed stream is derived from the vaporized ammonia stream, the superheated vaporized ammonia stream, or the heated ammonia stream.

In one embodiment, the process comprises: directing the intermediate cracked gas to the heating system. Said heating system is configured to provide heat to the intermediate cracked gas.

In one embodiment, the process comprises: heating the intermediate cracked gas at a predetermined temperature, for example at around 650°C, so as to provide a heated intermediate cracked gas to said subsequent gas heated reactor, in particular to a last gas heated reactor, of the succession of gas heated reactors. For example, the intermediate cracked gas can be heated with the heating system, in particular in a convection and a radiation section of the heating system.

In one embodiment, the process comprises the following step of:
- directing said intermediate cracked gas to a last gas heated reactor of the succession of gas heated reactors to perform an ammonia cracking conversion, so as to produce the cracked gas.

In one embodiment, the process comprises the following steps of:
- directing the cracked gas from the last gas heated reactor to the heating system,
- heating the cracked gas with said heating system, thereby obtaining a heated cracked gas. For example, the cracked gas is heated at a temperature comprised between 450 and 460°C.

In particular, the process comprises directing the heated cracked gas as the heating medium stream to at least one of said at least two gas heated reactors arranged in series.

In one embodiment, the process comprises the following steps of:
- directing the cracked gas, in particular the heated cracked gas heated with said heating system, as the heating medium stream to a heating medium inlet of one of said gas heated reactors; and
- directing a cooled cracked gas from a heating medium outlet of said gas heated reactor to a heating medium inlet of another of the gas heated reactors, for example a heating medium inlet of the last of said gas heated reactors.

In one embodiment, the process comprises the step of: - heating again the cooled cracked gas between said gas heated reactors.

In one embodiment, the process comprises the step of:
- heating again said cooled cracked gas between said gas heated reactors with said heating system, for example with a reheater, to a predetermined temperature, for example at around 650 °C.

This provides more heat to the cooled cracked gas, so as to obtain a heated cooled cracked gas.

In one embodiment, the process comprises a step of recovering heat from the cooled cracked gas, thereby obtaining said hydrogen product.

The hydrogen product comprises hydrogen and nitrogen. In particular, the hydrogen product comprises hydrogen, nitrogen and unconverted ammonia.

In one embodiment, the step of recovering heat from the cooled cracked gas comprises:
- directing said cooled cracked gas from a heating medium outlet of the last gas heated reactor to said vaporizer configured to receive said cooled cracked gas; and
- vaporizing the liquid ammonia stream by recovering residual heat from the cooled cracked gas.

Preferably, the temperature of a cooled cracked gas from the heating medium outlet of the last gas heated reactor entering to said vaporizer is cooled down at a predetermined temperature, for example at a temperature of 150°C.

In one embodiment, the step of recovering heat from the cooled cracked gas comprises the steps of:
- directing the cooled cracked gas, for example at around 365°C, from a heating medium outlet of the last gas heated reactor to said superheater configured to receive said cooled cracked gas,
- superheating the vaporized ammonia stream by recovering residual heat from the cooled cracked gas.

The step of recovering heat from the cooled cracked gas may comprise:
- discharging from the superheater the cooled cracked gas from which residual heat was recovered;
- directing the discharged cooled cracked gas to the vaporizer; and
- vaporizing the liquid ammonia stream by recovering residual heat from the cooled cracked gas in the vaporizer.

In one embodiment, the step of recovering heat from the cooled cracked gas comprises:
- directing the cooled cracked gas, for example at a temperature around 100°C, from a heating medium outlet of the last gas heated reactor to said preheater configured to receive said cooled cracked gas, in particular from the superheater to said preheater;
- preheating the liquid ammonia stream by recovering residual heat from the cooled cracked gas.

The step of recovering heat from the cooled cracked gas may comprise:
- discharging from the vaporizer the cooled cracked gas from which residual heat was recovered,
- directing said discharged cooled cracked gas to said preheater,
- preheating the liquid ammonia stream by recovering residual heat from the cooled cracked gas in the preheater.

In one embodiment, the process comprises removing unconverted ammonia from said hydrogen product, for example with a wash column, so as to obtain an ammonia depleted hydrogen product.

Said ammonia depleted hydrogen product comprises for example less than 10 ppmv of ammonia. The process may comprise recovering said removed unconverted ammonia, for example from a bottom liquid stream of the wash column, typically by distillation. Said recovered unconverted ammonia may be recycled to the vaporized ammonia stream and/or as a fuel stream to the heating system.

In one embodiment, the process comprises a step of recovering hydrogen from the hydrogen product or from the ammonia depleted hydrogen product, for example by partial condensation and/or by pressure swing adsorption. Thus, the hydrogen product with a high purity hydrogen, for example comprising more than 98 mol% hydrogen, preferably more than 99 mol% hydrogen, can thereby be obtained. Off-gasses separated from the hydrogen product or the ammonia depleted hydrogen product can be sent as fuel stream.

In one embodiment, the process comprises: providing the ammonia stream, in particular a liquid ammonia stream, typically at a temperature around -33°C. Preferably, the liquid ammonia stream is provided with a feed pump. Advantageously, the feed pump is arranged to be supplied by a liquid ammonia stream from the battery limit.

In one embodiment, the process comprises: vaporizing the ammonia stream with the vaporizer at approximately 70°C.

The following embodiments are examples. Although the description refers to one or more embodiments, this does not necessarily mean that each reference relates to the same embodiment, or that the features only apply to a single embodiment. Individual features of various embodiments can also be combined or interchanged in order to create other embodiments.

### BRIEF DESCRIPTION OF DRAWINGS

Note that all of the features and configurations described above are purely examples. Other features, details and advantages of the invention will become clearer on reading the detailed description set out below, together with several embodiments provided purely as examples and by way of indication, with reference to the attached schematic drawings, in which:

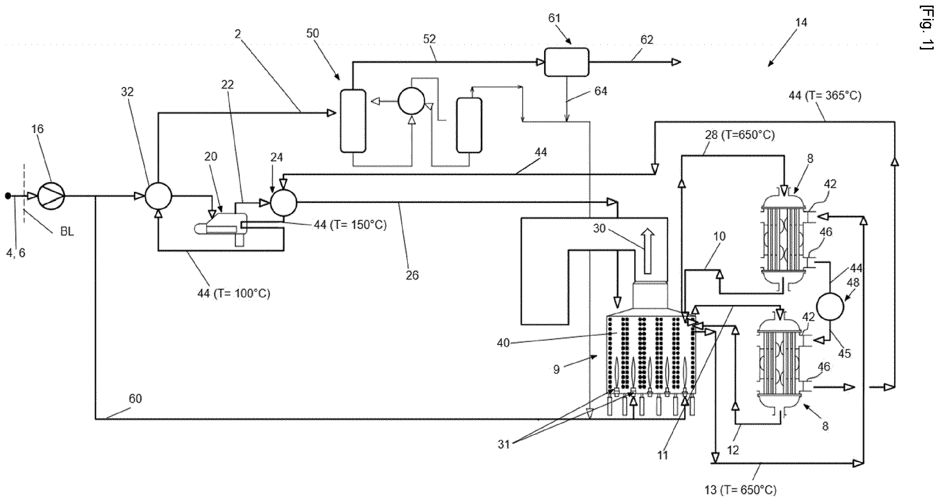

Figure 1 is a schematic representation of an installation, in accordance with one embodiment of the present invention.

Throughout the description, identical elements or elements with the same function are designated by the same reference sign.

Referring to figure 1, a process for producing a hydrogen product 2 from a feed stream 4 is represented. Said process comprises the following steps:
- providing a liquid ammonia stream 6;
- directing said feed stream 4 derived from the provided liquid ammonia stream 6 to a succession of two gas heated reactors 8 arranged in series to perform a succession of ammonia cracking reactions in the gas heated reactors 8, so as to produce intermediate cracked gas 10 passing from a gas heated reactor 8 to the subsequent gas heated reactor 8 and thus producing downstream of the succession of said gas heated reactors 8, a cracked gas 12 from which the hydrogen product 2 is derived.

The ammonia conversion rate of the intermediate cracked gas 10 is inferior to the ammonia conversion rate of the cracked gas 12.

Thanks to the invention the number of the gas heated reactors 8 can be adapted for an existing heating system 9, it is possible to modularize the size and the overall conversion efficiency of the process, without oversizing the heating system 9 while simplifying the design of an installation 14 configured to operate the process.

For example, over 80 % of overall ammonia conversion can be achieved with the two gas heated reactors 8 coupled with a heating system 9. This allows to revamp an existing installation 14 or plant.

The process comprises: providing the liquid ammonia stream 6, typically at a temperature around -33°C. The liquid ammonia stream 6 is provided with a feed pump 16. The feed pump 16 is arranged to be supplied by the liquid ammonia stream 6 from the battery limit BL.

The process comprises the step of: - heating one of the gas heated reactors 8 with said cracked gas 12 as a heating medium stream. In particular, the gas heated reactor 8 is heated with said cracked gas 12 circulating in said gas heated reactor 8 in a co-current manner with the feed stream 4 or with the intermediate cracked gas 10.

Thus, this allows to reduce the loss of the waste heat, thereby improving the overall conversion efficiency (or the overall thermal efficiency) of the process.

The invention enables improving the overall efficiency of the process, while reducing the space requirement and the overall cost of an installation 14 operating said process.

The process comprises directing the cracked gas 12 as the heating medium stream successively to said gas heated reactors.

By "directing the cracked gas 12 as the heating medium stream successively to said gas heated reactors 8", it is referred that the heating medium stream provides heat to the gas heated reactors 8 in series.

The process comprises the step of: - directing a liquid ammonia stream 6 to a vaporizer 20 configured to receive said liquid ammonia stream 6 and to vaporize said liquid ammonia stream 6 so as to obtain a vaporized ammonia stream 22.

The process comprises: vaporizing the liquid ammonia stream 6 by recovering heat from the cracked gas 12.

The process comprises: vaporizing the liquid ammonia stream 6 with the vaporizer 20 at approximately 70°C.

The process comprises the step of: - superheating the vaporized ammonia stream 22 with a superheater 24, thereby obtaining a superheated vaporized ammonia stream 26. Preferably, the vaporized ammonia stream 22 can be superheated at a temperature of 345°C using said cracked gas 12, more preferably at a temperature of 365 °C.

The process comprises: - superheating the vaporized ammonia stream 24, at a temperature of 345 °C, by recovering heat from a flue gas stream 30 generated from said heating system 9, in particular at 765°C. The flue gas stream 30 may be originated from at least one fired heater 31 of said heating system 9.

The process comprises a step of preheating said liquid ammonia stream 6 in a preheater 32, for example by either using heat from the cracked gas 12 or other heating media, prior to directing the liquid ammonia stream 6 to the vaporizer 20.

The process comprises the steps of:
- directing the superheated vaporized ammonia stream 26, to the heating system 9; and
- providing heat to the superheated vaporized ammonia stream 26, with said heating system 9, thereby obtaining a heated ammonia stream 28. Preferably, the superheated vaporized ammonia stream 26 is heated up to a temperature of 650 °C.

Said feed stream 4 is derived from the vaporized ammonia stream 22, the superheated vaporized ammonia stream 26, or the heated ammonia stream 28.

The process comprises: directing the intermediate cracked gas 10 to the heating system 9. Said heating system 9 is configured to provide heat to the intermediate cracked gas 10.

The process comprises: heating the intermediate cracked gas 10 at a predetermined temperature, for example at around 650°C, so as to provide a heated intermediate cracked gas 11 to a last gas heated reactor 8, of the succession of gas heated reactors 8. For example, the intermediate cracked gas 10 can be heated with the heating system 9 in a convection and a radiation section 40 of the heating system 9.

The process comprises the following steps of:
- directing said intermediate cracked gas 10 to a last gas heated reactor 8 of the succession of gas heated reactors 8 to perform an ammonia cracking conversion, so as to produce the cracked gas 12;
- directing the cracked gas 12 from the last gas heated reactor 8 to the heating system 9,
- heating the cracked gas 12 with said heating system 9, thereby obtaining a heated cracked gas 13.

The process comprises the following steps of:
- directing the heated cracked gas 28 heated with said heating system 9, as the heating medium stream to a heating medium inlet 42 of one of said gas heated reactors 8; and
- directing a cooled cracked gas 44 from a heating medium outlet 46 of said gas heated reactor 8 to a heating medium inlet 42 of the last of said gas heated reactors 8.

The process comprises the step of: - heating again the cooled cracked gas 44 between said gas heated reactors 8.

The process comprises the step of:
- heating again said cooled cracked gas 44 between said gas heated reactors 8 with a reheater 48, to a predetermined temperature, for example at around 650 °C.

This provides more heat to the cooled cracked gas 44, so as to obtain a heated cooled cracked gas 45.

The process comprises a step of recovering heat from the cooled cracked gas 44, thereby obtaining said hydrogen product 2.

Said hydrogen product 2 comprises hydrogen and nitrogen. In particular, the hydrogen product 2 comprises hydrogen, nitrogen and unconverted ammonia.

The step of recovering heat from the cooled cracked gas 44 comprises:
- directing said cooled cracked gas 44 from a heating medium outlet 46 of the last gas heated reactor 8 to said vaporizer 20 configured to receive said cooled cracked gas 44; and
- vaporizing the liquid ammonia stream 6 by recovering residual heat from the cooled cracked gas 44.

Preferably, the temperature of the cooled cracked gas 44 from the heating medium outlet 46 of the last gas heated reactor 8 entering to said vaporizer 20 is cooled down at a predetermined temperature, for example at a temperature of 150°C.

The step of recovering heat from the cooled cracked gas 44 comprises the steps of:
- directing the cooled cracked gas 44, for example at around 365°C, from a heating medium outlet 46 of the last gas heated reactor 8 to said superheater 20 configured to receive said cooled cracked gas 44,
- superheating the vaporized ammonia stream 24 by recovering residual heat from the cooled cracked gas 44.

The step of recovering heat from the cooled cracked gas 44 may comprise:
- discharging from the superheater 24 the cooled cracked gas 44 from which residual heat was recovered;
- directing the discharged cooled cracked gas 44 to the vaporizer 20; and
- vaporizing the liquid ammonia stream 6 by recovering residual heat from the cooled cracked gas 44 in the vaporizer 20.

The step of recovering heat from the cooled cracked gas 44 comprises:
- directing the cooled cracked gas 44, for example at a temperature around 100°C, from a heating medium outlet 46 of the last gas heated reactor 8 to said preheater 32 configured to receive said cooled cracked gas 44, in particular from the superheater to said preheater 32;
- preheating the liquid ammonia stream 6 by recovering residual heat from the cooled cracked gas 44.

The step of recovering heat from the cooled cracked gas 44 comprises:
- discharging from the vaporizer 20 the cooled cracked gas 44 from which residual heat was recovered,
- directing said discharged cooled cracked gas 44 to said preheater 32,
- preheating the liquid ammonia stream 6 by recovering residual heat from the cooled cracked gas 44 in the preheater 32.

The process comprises removing unconverted ammonia from said hydrogen product 2, with a wash column 50, so as to obtain an ammonia depleted hydrogen product 52.

Said ammonia depleted hydrogen product 52 comprises for example less than 10 ppmv of ammonia. The process may comprise recovering said removed unconverted ammonia, for example from a bottom liquid stream of the wash column 50, typically by distillation. Said recovered unconverted ammonia may be recycled to the vaporized ammonia stream and/or as a fuel stream 60 to the heating system 9.

The process comprises a step of recovering hydrogen from the hydrogen product 2 or from the ammonia depleted hydrogen product 52, for example by partial condensation and/or by pressure swing adsorption 61. Thus, the hydrogen product with a high purity hydrogen 62, for example comprising more than 98 mol% hydrogen, preferably more than 99 mol% hydrogen, can thereby be obtained. Off-gases 64 separated from the hydrogen product 2 or the ammonia depleted hydrogen product 52 can be sent as fuel stream 60.

## Claims

1. A process for producing a hydrogen product (2) from a feed stream (4), said process comprising the following steps:
- providing an ammonia stream (6), in particular a liquid ammonia stream (6);
- directing said feed stream (4) derived from the provided ammonia stream (6) to a succession of at least two gas heated reactors (8) arranged in series to perform a succession of ammonia cracking reactions in the gas heated reactors (8),
so as to produce at least one intermediate cracked gas (10) passing from a gas heated reactor (8) to the subsequent gas heated reactor (8) and thus producing downstream of the succession of said gas heated reactors (8), a cracked gas (12) from which the hydrogen product (2) is derived.

2. Process according to claim 1, comprising the step of: - heating at least one of the gas heated reactors (8) with said cracked gas (12) as a heating medium stream.

3. Process according to claim 2, wherein the at least one gas heated reactor (8) is heated with said cracked gas (12) circulating in said at least one gas heated reactor (8) in a co-current manner with the feed stream (4) or with the intermediate cracked gas (10).

4. Process according to claim 2 or 3, comprising directing the cracked gas (12) as the heating medium stream successively to said gas heated reactors (8).

5. Process according to any one of the preceding claims, comprising the steps of:
- directing the ammonia stream (6), in particular a vaporized ammonia stream (22), and/or a superheated vaporized ammonia stream (26), to a heating system (9); and
- providing heat to the ammonia stream (6), in particular to the vaporized ammonia stream (22), and/or to the superheated vaporized ammonia stream (26), with said heating system (9), thereby obtaining a heated ammonia stream (28).

6. Process according to claim 5, wherein said feed stream (4) is derived from the vaporized ammonia stream (22), the superheated vaporized ammonia stream (26), or the heated ammonia stream (28).

7. Process according to any one of the preceding claims, said process comprising: heating the intermediate cracked gas (10) at a predetermined temperature so as to provide a heated intermediate cracked gas (11) to said subsequent gas heated reactor (8), in particular to a last gas heated reactor (8), of the succession of gas heated reactors (8).

8. The process according to claim 7, said process comprising the following steps of:
- directing the cracked gas (12) from the last gas heated reactor (8) to the heating system (9),
- heating the cracked gas (12) with said heating system (9), thereby obtaining a heated cracked gas (13), and
- directing the heated cracked gas (13) as the heating medium stream to at least one of said at least two gas heated reactors (8) arranged in series.

9. The process according to claim 8, comprising the following steps of:
- directing the cracked gas (12), in particular the heated cracked gas (13) heated with said heating system (9), as the heating medium stream to a heating medium inlet (42) of one of said gas heated reactors (8); and
- directing a cooled cracked gas (44) from a heating medium outlet (46) of said gas heated reactor (8) to a heating medium inlet (42) of another of the gas heated reactors (8), for example a heating medium inlet (42) of the last of said gas heated reactors (8).

10. The process according to claim 9, comprising the step of: - heating again the cooled cracked gas (44) between said gas heated reactors (8).

11. The process according to claim 9 or 10, comprising a step of recovering heat from the cooled cracked gas (44), thereby obtaining said hydrogen product (2).

12. The process according to any one of the preceding claims, said process comprising the step of: - directing a liquid ammonia stream (6) to a vaporizer (20) configured to receive said liquid ammonia stream (6) and to vaporize said liquid ammonia stream (6) so as to obtain a vaporized ammonia stream (22).

13. The process according to claims 11 and 12, wherein the step of recovering heat from the cooled cracked gas (44) comprises:
- directing said cooled cracked gas (44) from a heating medium outlet (46) of the last gas heated reactor (8) to said vaporizer (20) configured to receive said cooled cracked gas (44); and
- vaporizing the liquid ammonia stream (6) by recovering residual heat from the cooled cracked gas (44).

14. The process according any one of the preceding claims, said process comprising removing unconverted ammonia from said hydrogen product (2), for example with a wash column (50), so as to obtain an ammonia depleted hydrogen product (52).
